# EUROPEAN PATENT APPLICATION

(11) **EP 4 685 434 A1**
(43) Date of publication of application: **28.01.2026**
(21) Application number: 24190681.7
(22) Date of filing: 24.07.2024
(51) Int. Cl.: G01B 11/25

(54) **VARIABLE LASER LINE MODULE**

(71) Applicant: Hexagon Innovation Hub GmbH, 9435 Heerbrugg (CH)
(72) Inventor: STIGWALL, Johan, 9000 St. Gallen (CH); KIPFER, Peter, 9443 Widnau (CH); JENSEN, Thomas, 9400 Rorschach (CH)
(74) Representative: Kaminski Harmann

(57) **Abstract**

The invention pertains to a laser line module LLM (1) for projecting a laser line onto a surface of a distant target object. The laser line module (1) comprises a light emitting assembly (10a) configured to emit measuring radiation, the light emitting assembly comprising a laser diode (11) and a beam shaping assembly, wherein the laser diode (11) and the beam shaping assembly are arranged and configured to guide the measuring radiation along an optical axis (OA) of the laser line module (1). The LLM comprises a line adjusting unit (10b) successively arranged to be irradiated by the measuring radiation of the light emitting assembly (10a) and configured to manipulate the measuring radiation to provide the laser line with a defined laser line length, the line adjusting unit comprising a first micro-lens array (15) having a first beam-manipulation surface having a multitude of first microlenses which define a first periodic height profile and providing a first refractive power. The line adjusting unit (10b) comprises a second micro-lens array (16) comprising a second beam-manipulation surface having a multitude of second microlenses which define a second periodic height profile and providing a second refractive power, and an actuator coupled to the second micro-lens array (16) and providing movability of the second micro-lens array (16) relative to the first micro-lens array (15).

## Description

The present invention pertains to a laser line module and to a laser-line triangulation device comprising such a laser line module. The laser line module is configured to project a laser line onto a distant object, wherein the length of the laser line is selectable by controlling a relative arrangement of two micro-lens arrays, thereby allowing control over the divergence of the radiation and, thus, the laser line length.

The need exists in many technical areas of application to measure objects with high accuracy or with respect to their composition. This applies in particular to the manufacturing industry, for which measuring and checking surfaces of workpieces is highly important, in particular also for the purposes of quality control.

Coordinate measuring machines, for example, which enable a precise measurement of the geometry of an object surface, typically at micrometer accuracy, are used for such applications. Objects to be measured can be engine blocks, transmissions, and tools, for example. Known coordinate measuring machines measure the surface by establishing a mechanical contact and scanning the surface. Examples thereof are gantry measuring machines as described, for example, in DE 43 25 337 or DE 43 25 347. Another system is based on the use of an articulated arm, the measuring sensor of which, which is arranged at the end of the multipart arm, can be moved along the surface. Generic articulated arms are described, for example, in US 5,402,582 or EP 1 474 650.

A further example of a generic system for measuring object surfaces for the purpose of manufacturing control is a triangulation scanner. As a measuring method, triangulation enables, in general, the rapid and precise scanning of a surface. Such measuring systems are described, for example, in DE 10 2004 026 090 A1 and WO2011/000435A1.

A measuring system based on the principle of (laser) line projection represents a special form of the triangulation scanner. Such a measuring device typically has a projector and one or two cameras, which enable a respective acquisition of a pattern projected by means of the projector at different angles. Such systems are known, for example, from EP 3 258 211 A1 or US 2014/0078490 A1.

Triangulation scanners offer the advantage of nondestructive and contactless surface measurement with comparatively high measurement accuracy and rapid measurement progress at the same time.

Coordinate surface measurement permits geometric deviations on the workpiece from corresponding target values to be established. In this regard, a high accuracy can thus be provided for the manufacturing precision or manufacturing quality. It can thus be established whether shape and dimensioningof the produced part are within a predetermined tolerance and the component is to be considered a discard or good part.

Optical (triangulation) scanners typically have a defined measurement volume, within which a surface measurement is reliably possible. In other words, the distance between the measuring device and the surface has to correspond to a specific measurement distance from a permissible distance range. The measurement volume is delimited laterally in relation to the distance by the lateral measuring range (measurement field). In such devices, the measurement distance has to be maintained accordingly in each case, for example, for different objects or objects having complex surface geometry and the lateral measuring range is thus given. EP 3 165 874 B1 shows a laser line module for triangulation-based distance measurement.

However, measuring devices are also known which can provide different measuring ranges. For this purpose, the objectives of both the camera and also the (line) projector can be changed. This exchange is to be carried out manually by a user. A recalibration of the cameras in relation to one another has to take place accompanying this. This sequence results in a measurement interruption and thus a disadvantageous lengthening of the total measuring time and moreover only has limited suitability for automated use.

It is therefore an object of the present invention to provide an improved triangulation sensor which provides highly accurate measurement of objects of different sizes within a defined measuring range.

It is a further object of the present invention to provide an improved laser line module that allows simply varying the length of the laser line.

It is a particular object to provide such a laser line module that allows a user to actively change the laser line length in an easy manner.

It is another object to provide such a laser line module that is cheap and easy to produce and at the same time sturdy and low-maintenance.

It is a further object to provide laser-line triangulation device comprising such an improved laser line module.

At least one of these objects is achieved by the implementation of the characterizing features of the independent claims. Features which refine the invention in an alternative or advantageous manner can be inferred from the dependent claims.

According to a common type of laser line module (LLM) the emitted laser line can be focused (in an across-line direction) to provide a respectively focused line with the same angular spectrum for different working distances. This means, the divergence angle for each of the projected line lengths is the same.

In contrast, the present idea relates to a solution which provides varying the length of the laser line while keeping the working distance constant, i.e. providing different angular spectra. As a result, the laser line imaged on side of the camera respectively varies.

The invention relates to a laser line module for projecting a laser line onto a surface of a distant target object. The LLM can particularly be part of a laser line triangulation device for measuring a distance to said surface. The laser line module comprises a light emitting assembly configured to emit measuring radiation, the light emitting assembly comprising a laser diode and a beam shaping assembly.

In particular, the beam shaping assembly can comprise a focusing lens or collimator, a beam-forming micro-lens array and/or a cylindrical lens to manipulate and guide the measuring radiation in form of a laser line.

The laser diode and the beam shaping assembly are arranged and configured to guide the measuring radiation along an optical axis of the laser line module.

The LLM further comprises a line adjusting unit successively arranged to be irradiated by the measuring radiation of the light emitting assembly and configured to manipulate the measuring radiation to provide the laser line with a defined laser line length. The line adjusting unit is arranged to be irradiated by the measuring radiation emitted by the light emitting assembly.

The line adjusting unit comprises a first micro-lens array having first beam-manipulation surface having a multitude of first microlenses which define a first periodic height profile and providing a first refractive power of the first micro-lens array.

The first micro-lens array can additionally have a first reference surface defining a reference plane orthogonal to the optical axis.

The line adjusting unit further comprises a second micro-lens array comprising a second beam-manipulation surface having a multitude of second microlenses which define a second periodic height profile and providing a second refractive power of the second micro-lens array.

An actuator is provided and coupled to the first or second micro-lens array and provides movability of the first or second micro-lens array relative to the other (second or first) micro-lens array.

The first and the second micro-lens array constitute an optical assembly which corresponds to a so called "Alvarez" element. By that, the total refractive power of the line adjusting unit can be varied as a function of a positional shift of one of the micro-lens arrays relative to the other. This means, by moving or shifting one of the micro-lens arrays a total divergence of the line adjusting unit can be changed and the length of the resulting laser line changes correspondingly.

When measuring small objects (or small parts of larger objects), a shorter laser line can advantageously reduce the data volume per frame captured by the camera (or other sensor) of the laser-line triangulation device. Thereby, capturing of unwanted data can be avoided, if only a certain part of an object, such as a particular edge, is of interest. As a result, by actively reducing the laser line length, higher measuring ratios are achievable. As an advantage, by changing the emitted laser line length the user gets a direct visual feedback of the selected measurement mode in comparison to only clipping data of the image sensor to a shorter length region.

In one embodiment, the first reference surface can face the light emitting assembly and the first beam-manipulation surface can face away from the light emitting assembly. Hence, the first reference surface is considered to be the "backside" of the micro-lens array, in particular a planar optical interface which has virtually no effect on the light (planar side of the micro-lens array).

In one embodiment, the second beam-manipulation surface faces the first beam-manipulation surface. Here, the micro lenses on the arrays can preferably be arranged opposite of each other to provide laser line with maximum length. If the elevations of the lenses of one of the arrays are arranged opposite to the depressions of the lenses of the other array the length of the line can become smallest.

Accordingto one embodiment, the actuator and the second micro-lens array can be arranged and configured to provide moveability of the second micro-lens array in a direction orthogonal to the optical axis. In particular movability is provided in only one linear direction.

The micro-lens arrays can be formed to provide wave-like surface profiles, wherein the successively arranged elevations and depressions on the array define a periodicity direction. Moveability of the second micro-lens array can preferably be provided according to such periodicity direction.

In one embodiment, the laser line module can be configured to provide a minimum laser line length by controlling the actuator to provide a first relative arrangement of the first micro-lens array and the second micro-lens array, and a maximum laser line length by controlling the actuator to provide a second relative arrangement of the first micro-lens array and the second micro-lens array. The second relative arrangement of the first micro-lens array relative to the second micro-lens array is shifted by half the period of the first or the second periodic height profile with respect to the first relative arrangement.

In other words: a shift of the arrangement of the first micro-lens array relative to the second micro-lens array by a distance which corresponds half the period of one of the micro lens array profiles can results in a maximum change of the length of the laser line. The shift can preferably be provided in a direction defined by the surface structure of one of the micro-lens arrays, e.g. in the periodicity direction.

According to one embodiment, - in the first relative arrangement of the micro-lens arrays - maxima of the first periodic height profile can be arranged opposite to minima of the second periodic height profile, in particular with respect to a direction parallel to the optical axis (OA) and/or across the periodicity direction. In other words, maxima of the first periodic height profile can face minima of the second periodic height profile. A distance between a maximum of the first periodic height profile and a respectively opposing minimum of the second periodic height profile in the first relative arrangement can be smaller than the distance between the respective maximum and the respective minimum in the second relative arrangement. This can also be true for any other, intermediate relative arrangement except the first relative arrangement.

According to one embodiment, - in the second relative arrangement - maxima of the first periodic height profile can be arranged opposite to maxima of the second periodic height profile, in particular with respect to the direction parallel to the optical axis. A distance between a maximum of the first periodic height profile and a respectively opposing maximum of the second periodic height profile in the second relative arrangement can be smaller than the distance between said maximum and the respective maximum in the first relative arrangement. This can also be true for any other, intermediate relative arrangement except the second relative arrangement.

In one embodiment, the first micro-lens array and the second micro-lens array can be configured so that
- in the first relative arrangement - a contribution to the total refractive power of the line adjusting unit by the refractive power of the first micro-lens array is attenuated or compensated by means of a contribution by the refractive power of the second micro-lens array, and/or
- in the first relative arrangement - the total refractive power of the line adjusting unit is smaller or equal to the refractive power of the first micro-lens array, and/or
- in the second relative arrangement - a divergence provided by the refractive power of the first micro-lens array is further increased by means of the refractive power of the second micro-lens array, and/or
- in the second relative arrangement - the total refractive power of the line adjusting unit is greater than the refractive power of the first micro-lens array.

In one embodiment, the first micro-lens array and the second micro-lens array can be configured so that a total divergence of the measuring radiation passing the line adjusting unit increases with increasing lateral offset of the second micro-lens array with reference to the first relative arrangement, wherein the lateral offset is smaller than half the period of the first or the second periodic height profile.

In one embodiment, the laser line module can be configured to provide at least one intermediate laser line length by controlling the actuator to provide an intermediate arrangement of the first micro-lens array and the second micro-lens array, wherein a lateral position of the second micro-lens array relative to the first micro-lens array can be shifted by less than half the period of the first or the second periodic height profile with respect to the first relative arrangement.

According to one embodiment, the refractive power of the first micro-lens array is smaller than the refractive power of the second micro-lens array.

In one embodiment, an amplitude of the first periodic height profile is smaller than an amplitude of the second periodic height profile.

In one embodiment, the first micro-lens array is arranged between the second micro-lens array and the light emitting assembly.

In one embodiment, the line adjusting unit is configured to manipulate transmitting measuring radiation to increase divergence of the transmitting measuring radiation, regardless of the relative arrangement of the first micro-lens array and the second micro-lens array.

In one embodiment, the actuator is a piezo-based actuator and comprises a flexure coupled to the second micro-lens array. In one embodiment, the actuator can comprise a voice coil and a flexure, a rotating motor in combination with a rack and pinion, and/or a voice coil with bistable magnetic end stops.

The invention also relates to a laser line triangulation device for measuring a distance to the surface of a target object. The device comprises an image sensor and a laser line module of above. The laser line module and the image sensor are arranged and oriented so that the laser line module projects a laser line into a field-of-view of the image sensor.

In one embodiment, the laser line triangulation device can be configured for scanning the surface of the target object with the laser line projected by the laser line module.

The invention in the following will be described in detail by referring to exemplary embodiments that are accompanied by figures, in which:
- Fig. 1: shows a laser-line triangulation sensor;
- Fig. 2: shows the components of a generic laser line module;
- Fig. 3a: shows laser line lengths varying in dependence of different working distances;
- Fig. 3b: shows a variation of the laser line lengths at a constant working distance;
- Fig. 4: shows an exemplary embodiment of a laser line module according to the invention;
- Figs. 5a-b: illustrate an embodiment of a first micro-lens array and second microlens array according to the invention;
- Fig. 6: illustrates an embodiment of an actuator coupled to the second microlens array according to the invention; and
- Figs. 7a-b: show a further embodiment of a first micro-lens array and a second micro-lens array and respective beam profiles according to the invention.

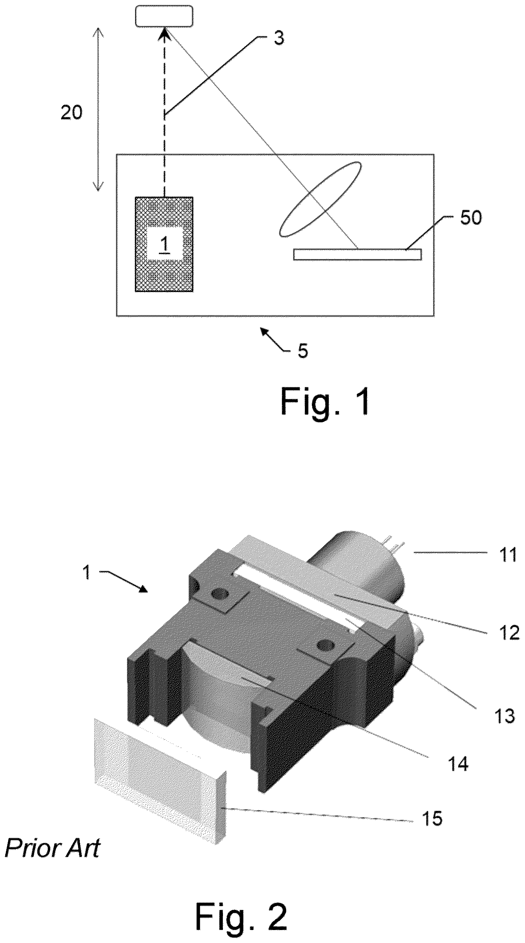

**Figure 1** shows an exemplary embodiment of a laser-line triangulation device 5 according to the invention. The device comprises a laser line module (LLM) 1 configured to emit a laser line 3 onto an object, which surface produces a scattered reflection of the laser line. Although the laser line 3 is described as a line, it is technically speaking a two-dimensional "line-like" plane having a width that is very small compared to its length. The device 5 comprises a sensor arrangement comprising an image sensor 50 with a lens in front that is configured to image the scattered reflection of the laser line. The laser line 3 is shown from the side here, i.e., perpendicular to the image plane, and is therefore represented by a single line (in one dimension). The distance between the LLM 1 and the object is the working distance (WD) 20. The LLM 1 projects the laser line 3 onto a surface of the distant object and a camera of the of the laser-line triangulation device 5, comprising a lens and an image sensor 50, views the laser line and extracts a 3D profile of the surface in a manner that is generally known in the art.

**Figure 2** shows an exemplary LLM 1 that is part of a generic laser-line triangulation device. The shown LLM 1, which is generally known in the art, comprises a laser diode 11, a collimator element (with a collimation lens inside, not shown) 12, a beam-forming micro-lens array (MLA) 13, a cylindrical lens 14 and a MLA 15.

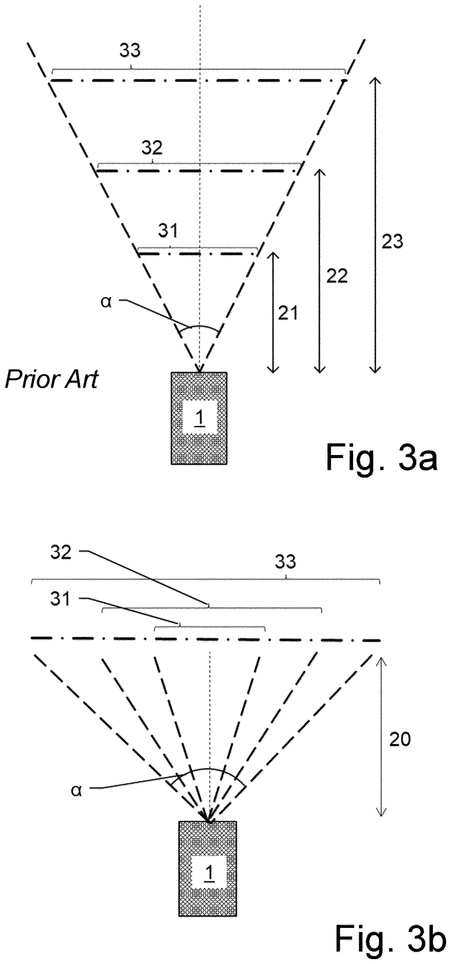

As illustrated in **Figure 3a****,** an LLM 1 as shown in **Figure 2** has a fixed angular spectrum (divergency angle α). Consequently, the resulting length of the projected laser line (laser line length, LLL) 31-33 depends on the respective working distance (WD) 21-23, i.e. the distance of the LLM 1 from the surface onto which the laser line is projected. As shown in in **Figure 3a****,** a short WD 21 results in a short LLL 31, and longer WDs 22,23 in respectively longer LLLs 32, 33.

**Figure 3b** illustrates varying the LLL according to the invention without having to change the working distance WD 20. As shown in **Figure 3b****,** a variety of LLLs 31-33 can be provided for a constant WD 20. A shorter LLL allows the user to scan smaller objects more accurately. Also, with a shorter LLL a higher power density can be provided which allows e.g. for scanning of dark surfaces at longer distance. Further, a reduction of reflections can be realized. This is because the longer the line projected is, the larger is the risk that there are reflections at an object that may disturb the measurement. In addition, the user gets direct feedback concerning the scanning mode because the user can see if the scanner is in short or wide mode.

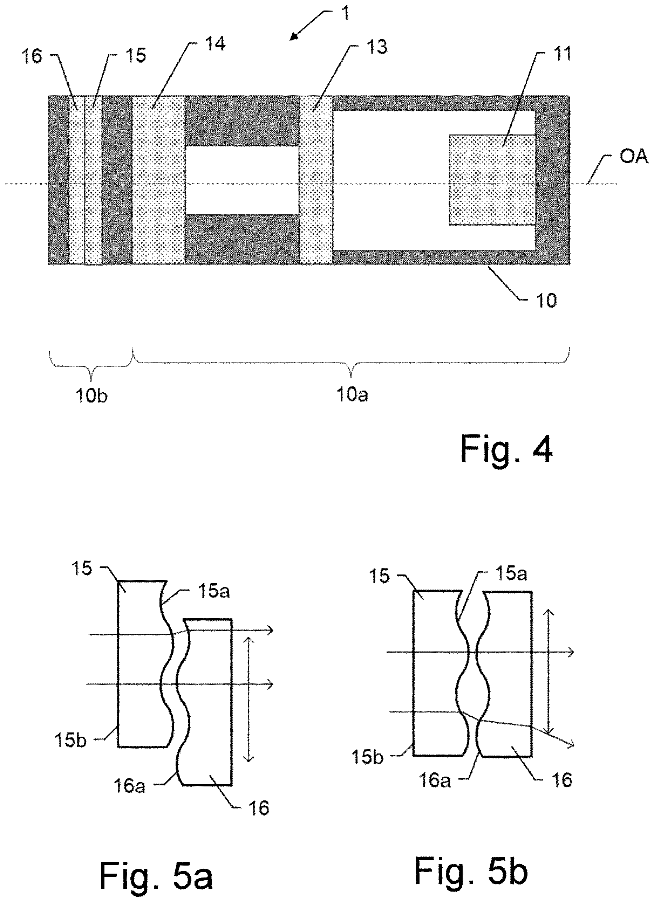

**Figures 4** illustrates an exemplary embodiment of an LLM 1 according to the invention, where **Figure 4** shows a cross-sectional view of the LLM 1. The LLM 1 shown here comprises a light emitting assembly 10a with at least a collimated laser diode 11, a beam-forming micro-lens array (MLA) 13 and a cylindrical lens 14 and a line adjusting unit 10b having at least a first micro-lens array 15 and a second micro-lens array 16.

The laser diode 11, the beam-forming micro-lens array 13 and the cylindrical lens 14 are arranged and configured to generate and guide the measuring radiation along an optical axis OA of the laser line module 1. In one embodiment, the light emitting assembly 10a may also comprise a collimator, preferably arranged between the laser diode 11 and the beam-forming micro-lens array 13. Alternatively, the collimator can also be built integrated with the laser diode 11. Anyway, it is to be understood, that the light emitting assembly 10a comprises a collimating element for collimation of the emitted laser light.

The line adjusting unit 10b is arranged behind the light emitting assembly 10a, with respect to propagation of the measuring radiation, to be irradiated by the measuring radiation of the light emitting assembly 10a and configured to manipulate the measuring radiation to provide the laser line with a defined laser line length.

The first micro-lens array 15 comprises a first reference surface defining a reference plane orthogonal to the optical axis, and a first beam-manipulation surface having a multitude of first microlenses which define a first periodic height profile and providing a first total refractive power of the first micro-lens array 15.

The second micro-lens array 16 comprises a second beam-manipulation surface having a multitude of second microlenses which define a second periodic height profile and providing a second refractive power of the second micro-lens array 16.

The surfaces of the first and second micro-lens array 15,16 are described in more detail below.

In addition, an actuator is arranged in the LLM 1 and is coupled to the second micro-lens array to provide movability of the second micro-lens array relative to the first micro-lens array.

The first and second micro-lens array 15,16 are preferably be arranged at the beam exit of the LLM 1.

**Figures 5a** illustrates an embodiment of a first micro-lens array 15 and a second micro-lens array 16 of a line adjusting unit 10b according to the invention.

The first micro-lens array 15 comprises a first reference surface 15b defining a reference plane orthogonal to the optical axis, and a first beam-manipulation surface 15a having a multitude of first microlenses which define a first periodic height profile and providing a first total refractive power of the first micro-lens array 15. The multitude of first microlenses can be provided by a series of linearly elongated elevations and depressions successively arranged in alternating manner.

The first and/or the second micro-lens array 15,16 can be manufactured of glass or polymer material having optical properties which allows suitable manipulation of light emitted by the laser diode.

The second micro-lens array 16 comprises a second beam-manipulation surface 16a having a multitude of second microlenses which define a second periodic height profile and providing a second refractive power of the second micro-lens array 16. The multitude of second microlenses can be provided by a series of linearly elongated elevations and depressions successively arranged in alternating manner.

As can be seen the first micro-lens array 15 and the second micro-lens array 16 are arranged so that their respective beam-manipulation surfaces 15a and 16a face to each other. In the shown embodiment, the lens shapes are complementary to each other.

The second micro-lens array 16 is arranged movable relative to the first micro-lens array 15. Such movability can be provided by an actuator (not shown). The second micro-lens array 16 is movable in a direction according to the periodicity of the microlenses, in particular in a direction parallel to the first reference surface 15b. The first micro-lens array 15 is preferably arranged fixed. In an alternative embodiment, the first micro-lens array and the second micro-lens array may be interchanged, which means that the first micro-lens array 15 can be arranged to be moved while the second array 16 can be arranged non-movable.

The shown arrangement is based on a so-called "Alvarez" or "Lohmann" configuration which consists of two refractive elements that change their total refractive power through mutual lateral displacement. The Lohmann design is based on two orthogonal cylindrical elements that require displacement in two lateral directions for a total spherical refractive power. For the Alvarez design, only movement along one direction is sufficient. As can be seen, the two lens shapes can be complementary to each other and generate practically no refractive power in the neutral position (**figure 5a**), i.e. they act more like a thicker plane-parallel glass plate.

When the micro-lens arrays 15,16 are laterally displaced against each other, an inhomogeneity in the refractive power (compared to the arrangement of **figure 5a**) with a symmetrical radial progression arise (**figure 5b**).

As can be seen from **figure 5a****,** in the neutral position of the MLA pair, the refractive powers of the first and second micro-lens array (MLA) can practically cancel each other out, e.g. the shape of the first MLA 15 acts like a positive lens at one point and the shape of the second MLA 16 like a negative lens at the opposite point. At most, there is a slight beam offset due to an air gap between the elements 15,16.

In one embodiment, the air gap can be smaller than 0.5 mm, in particular smaller than 0.1 mm.

If the MLAs 15,16 are shifted in relation to each other as indicated by the vertically oriented arrows in the **figures 5a** and **5b****,** the refractive forces in the curvature areas of the lenses do no longer cancel each other out but add up. Such portions of the measuring light are then deflected, i.e. the beam is widened, i.e. the resulting laser line can be extended.

Further, also a gradual widening of the beam can be achieved by shifting one of the MLAs, e.g. the first MLA 15 or the second MLA 16, in particular wherein the MLA is shifted gradually.

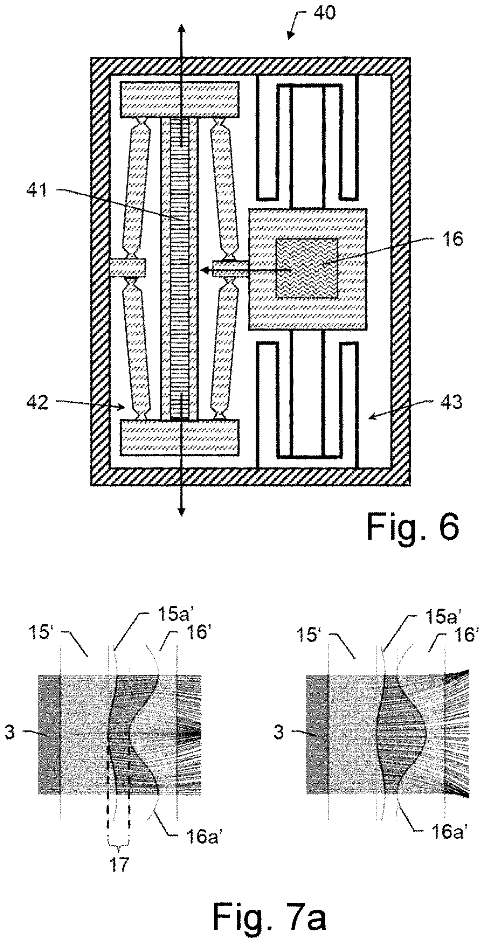

**Figure 6** illustrates an embodiment of an actuator 40 coupled to the second micro-lens array 16 according to the invention. The actuator 40 is embodied as a piezo-driven flexure arrangement. Such flexure arrangement provides comparatively robust and precise repeatability concerning the movement path of the second micro-lens array 16 and the distance the second micro-lens array 16 is moved. Said precision can preferably be provided in a sub millimeter range or in µm range.

The actuator 40 comprises a piezo element 41. The piezo element 41 is coupled to a first portion of the flexure 42 which provides an actuation direction of the piezo element 41 to be switched by 90°. In other words: the piezo element 41 provides vertical extension or contraction and the first portion of the flexure 42 provides the coupled MLA 16 to be moved horizontally as a function of the piezo movement.

Further, the actuator 40 comprises a second portion of the flexure 43, e.g. a parallelogram flexure, which is arranged to hold the MLA 16 and to substantially limit movability of the MLA 16 in horizontal direction. By means of the parallel design of the second portion of the flexure 43 the MLA 16 is guided in-between two parallelogram-like flexure portions and by that guided along a horizontal movement path.

**Figure 7a** shows a further embodiment of a first micro-lens array 15' and a second micro-lens array 16' of a line adjusting unit 10b according to the invention.

Here, the design of the MLA 15' is different from the design of the MLA 16'. While the periodicities of the respective beam-manipulation surfaces 15a' and 16a' are equal, i.e. a distance on the surface of one of the MLAs from one maximum (maximum elevation) to a successive maximum, their amplitudes differ.

The effect of such an arrangement on light transmitting the MLAs 15',16' is respectively shown in a first configuration (left side) which provides minimum divergence and in a second configuration (right side) which provides maximum divergence.

A different amplitude for the two MLAs 15',16' can be advantageous because a smaller refractive power of the first MLA 15' enables a reduced distance (gap 17) between both MLAs 15',16'. The different amplitudes of the MLAs 15',16' also prevent complete compensation (i.e. zero divergence) in the first configuration, so that a desired small divergence angle is still maintained. Furthermore, the arrangement of the "weaker" MLA 15', i.e. the MLA which provides less refractive power, in front of the stronger MLA 16' is advantageous because a beam offset on the second MLA 16', caused by the transition of the measuring light 3 from the first to the second MLA via an air gap 17, is smaller than with a reversed arrangement.

Further, the optical system can be configured so that the second MLA 16' can even overcompensate the first one 15'. In particular, the resulting divergence or refractive power is smaller than that provided by the second MLA 16', but not necessarily smaller than the divergence from the first MLA 15' alone.

In the second configuration, the refractive powers of the MLAs 15',16' provide a reinforced divergence effect on the measuring light 3. An extended laser line can be provided by that.

The shown design of the MLAs 15' and 16' provides a substantial continuous intensity profile taking particular optical boundary conditions into account. By that, e.g., compensation for the so-called cos⁴-effect when imaging the measuring light beam can be provided by providing superelevation at the edge of the measuring beam.

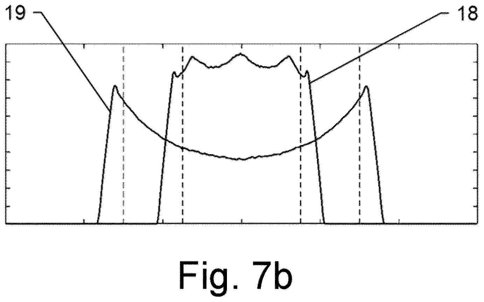

**Figure 7b** shows respective beam profiles for an embodiment of **figure 7a****.** As can be seen for at least the wider beam profile 19, i.e. the extended length of the laser line, the desired intensity superelevation at the edge of the beam, the so-called M-profile, can be provided by such embodiment of the MLAs 15' and 16'. The beam profile 18 results from the first configuration (left side) of **figure 7a** with small divergence. The beam profile 19 results from the second configuration (right side) of **figure 7a** with large divergence.

As can be seen, the intensity of the beam profile 18 for shorter line lengths is significantly greater (higher) than the intensity of the beam profile 19 for wider lengths. This increase in intensity results from the design of the optical system, i.e. the optical properties of the micro-lens arrays. In contrast to other known approaches, there is no elimination of light to provide a shorter line, but the combined effects of the micro-lens arrays provide proper forming and/or directing of the (emitted) light to generate a line of desired length.

Although the invention is illustrated above, partly with reference to some preferred embodiments, it must be understood that numerous modifications and combinations of different features of the embodiments can be made. All of these modifications lie within the scope of the appended claims.

## Claims

1. Laser line module (1) for projecting a laser line (3) onto a surface of a distant target object, particularly as part of a laser line triangulation device (5) for measuring a distance to said surface, the laser line module (1) comprising:
- a light emitting assembly (10a) configured to emit measuring radiation, the light emitting assembly comprising
▪ a laser diode (11) and
▪ a beam shaping assembly,
wherein the laser diode (11) and the beam shaping assembly are arranged and configured to guide the measuring radiation along an optical axis (OA) of the laser line module (1), and
- a line adjusting unit (10b) successively arranged to be irradiated by the measuring radiation of the light emitting assembly (10a) and configured to manipulate the measuring radiation to provide the laser line with a defined laser line length, the line adjusting unit comprising a first micro-lens array (15,15') having a first beam-manipulation surface (15a,15a') having a multitude of first microlenses which define a first periodic height profile and providing a first refractive power,
**characterized in that**
the line adjusting unit (10b) comprises
- a second micro-lens array (16,16') comprising a second beam-manipulation surface (16a, 16a') having a multitude of second microlenses which define a second periodic height profile and providing a second refractive power, and
- an actuator (40) coupled to the second micro-lens array (16,16') and providing movability of the second micro-lens array (16,16') relative to the first micro-lens array (15,15').

2. Laser line module (1) according to claim 1, wherein the first reference surface (15b) faces the light emitting assembly (10a) and the first beam-manipulation surface (15a, 15a') faces away from the light emitting assembly (10a).

3. Laser line module (1) according to claim 1 or 2, wherein the second beam-manipulation surface (16a,16a') faces the first beam-manipulation surface (15a,15a').

4. Laser line module (1) according to any one of the preceding claims, wherein the actuator (40) and the second micro-lens array (16,16') are arranged and configured to provide moveability of the second micro-lens array (16,16') in a direction orthogonal to the optical axis (OA), in particular in only one direction.

5. Laser line module (1) according to any of the preceding claims, wherein the laser line module (1) is configured to provide
- a minimum laser line length by controlling the actuator (40) to provide a first relative arrangement of the first micro-lens array (15,15') and the second micro-lens array (16,16'), and
- a maximum laser line length by controlling the actuator to provide a second relative arrangement of the first micro-lens array (15,15') and the second micro-lens array (16,16'), wherein the second relative arrangement of the first micro-lens array (15,15') and the second micro-lens array (16,16') is shifted by half the period of the first or the second periodic height profile with respect to the first relative arrangement.

6. Laser line module (1) according to claim 5, wherein - in the first relative arrangement - maxima of the first periodic height profile are arranged opposite to minima of the second periodic height profile, in particular with respect to a direction parallel to the optical axis (OA), and a distance between a maximum of the first periodic height profile and a respectively opposing minimum of the second periodic height profile in the first relative arrangement is smaller than the distance between the maximum and the respective minimum in the second relative arrangement.

7. Laser line module (1) according to claim 5 or 6, wherein - in the second relative arrangement - maxima of the first periodic height profile are arranged opposite to maxima of the second periodic height profile, in particular with respect to a direction parallel to the optical axis, and a distance between a maximum of the first periodic height profile and a respectively opposing maximum of the second periodic height profile in the second relative arrangement is smaller than the distance between said maximum and the respective maximum in the first relative arrangement.

8. Laser line module (1) according to any of the claims 5 to 7, wherein the first micro-lens array (15,15') and the second micro-lens array (16,16') are configured so that
- - in the first relative arrangement - a contribution to the total refractive power of the line adjusting unit (10b) by the refractive power of the first micro-lens array (15,15') is attenuated or compensated by means of a contribution by the refractive power of the second micro-lens array (16,16'), and/or
- - in the first relative arrangement - the total refractive power of the line adjusting unit (10b) is smaller or equal to the refractive power of the first micro-lens array (15,15'), and/or
- - in the second relative arrangement - a divergence provided by the refractive power of the first micro-lens array (15,15') is further increased by means of the refractive power of the second micro-lens array (16,16'), and/or
- - in the second relative arrangement - the total refractive power of the line adjusting unit (10b) is greater than the total refractive power of the first micro-lens array (15,15').

9. Laser line module (1) according to any of the claims 5 to 8, wherein the first micro-lens array (15,15') and the second micro-lens array (16,16') are configured so that a total divergence of the measuring radiation passing the line adjusting unit (10b) increases with increasing lateral offset of the second micro-lens array (16,16') with reference to the first relative arrangement, wherein the lateral offset is smaller than half the period of the first or the second periodic height profile.

10. Laser line module (1) according to any of the claims 5 to 9, wherein the laser line module (1) is configured to provide at least one intermediate laser line length by controlling the actuator to provide an intermediate arrangement of the first micro-lens array (15,15') and the second micro-lens array (16,16'), wherein a lateral position of the second micro-lens array (16,16') relative to the first micro-lens array (15,15') is shifted by less than half the period of the first or the second periodic height profile with respect to the first relative arrangement.

11. Laser line module (1) according to any of the preceding claims, wherein
- the total refractive power of the first micro-lens array (15,15') is smaller than the total refractive power of the second micro-lens array (16,16'), and/or
- an amplitude of the first periodic height profile is smaller than an amplitude of the second periodic height profile.

12. Laser line module (1) according to any of the preceding claims, wherein the first micro-lens array (15,15') is arranged between the second micro-lens array (16,16') and the light emitting assembly (10a).

13. Laser line module (1) according to any of the preceding claims, wherein the line adjusting unit (10b) is configured to manipulate transmitting measuring radiation to increase divergence of the transmitting measuring radiation, regardless of the relative arrangement of the first micro-lens array and the second micro-lens array.

14. Laser line module (1) according to any of the preceding claims, wherein the actuator (40) is a piezo-based actuator and comprises a flexure coupled to the second micro-lens array (16,16').

15. Laser line triangulation device (5) for measuring a distance to the surface of a target object, the device comprising an image sensor (50) and a laser line module (1) according to any one of the preceding claims, the laser line module (1) and the image sensor (50) being arranged and oriented so that the laser line module (1) projects a laser line (3) into a field-of-view (55) of the image sensor (50), in particular wherein the laser line triangulation (5) device is configured for scanning the surface of the target object with the laser line (3) projected by the laser line module (1).
